Europäisches Patentamt

European Patent Office

Office européen des brevets

(19)

(11) Veröffentlichungsnummer : **0 208 076**
**B1**

(12) **EUROPÄISCHE PATENTSCHRIFT**

(45) Veröffentlichungstag der Patentschrift :
13.12.89

(51) Int. Cl.⁴ : **B 01 D 25/12**

(21) Anmeldenummer : 86105923.6

(22) Anmeldetag : 29.04.86

(54) **Membranfilterplatte mit Trägerplatte und Dichtrand.**

(30) Priorität : 10.06.85 DE 8516901 U

(43) Veröffentlichungstag der Anmeldung :
14.01.87 Patentblatt 87/03

(45) Bekanntmachung des Hinweises auf die Patenterteilung : 13.12.89 Patentblatt 89/50

(84) Benannte Vertragsstaaten :
AT BE CH DE FR GB IT LI LU NL SE

(56) Entgegenhaltungen :
EP--A-- 0 081 715
FR--A-- 2 227 891
GB--A-- 878 991
GB--A-- 1 330 125
GB--A-- 2 110 104
GB--A-- 2 120 570
LU--A-- 65 488

(73) Patentinhaber : Klinkau & Co. GmbH
Raiffeisenstrasse 6
D-8952 Marktoberdorf-Leuterschach (DE)

(72) Erfinder : Stanik, R.
Bischof-Ketteler-Strasse 10
D-8952 Marktoberdorf (DE)

(74) Vertreter : Goddar, Heinz J., Dr. et al
FORRESTER & BOEHMERT Widenmayerstrasse 4/I
D-8000 München 22 (DE)

EP 0 208 076 B1

## Beschreibung

Die Erfindung betrifft eine Membranfilterplatte mit Trägerplatte und Dichtrand nach dem Oberbegriff des Hauptanspruches.

Aus der EP-A-0 081 715 ist eine Membranfilterplatte der vorstehend beschriebenen Art bekannt, die sich im Prinzip durchaus bewährt hat. Die besonders vorteilhafte Wirkungsweise der dort beschriebenen Membrankammerfilterplatte, verglichen mit den bis daher üblichen bzw. bekannten Membranfilterplatten, beruht wesentlich auf der charakteristischen Ausbildung des Übergangsbereiches der Anlagefläche der Trägerplatte zwischen Dichtrand und Trägerplattenzentralbereich, wie bei der Beschreibung der gattungsgemäßen Membranfilterplatte angegeben, da hierdurch die mechanische Beanspruchung der Membran beim Wechsel zwischen Anpreß- und Filtrationsphasen etc. optimal gering gehalten wird. Bei der gattungsgemäßen Membranfilterplatte können die Membranen ausgewechselt werden, indem die dort vorgesehenen Eckverschraubungen bzw. in den Dichtrandrahmenschenkeln vorgesehenen Verschraubungen gelöst und nach erneutem Einlegen der neuen Membran wieder angezogen werden, jedoch ist hierbei ein verhältnismäßig großer Richt- und Justieraufwand erforderlich, so daß ein Auswechseln der Membranen vor Ort durch den Benutzer bzw. Kunden nur schwer möglich ist.

Aus der GB-A-2 100 570 ist weiter eine einstückige Rahmenmembran bekannt, die mit einer Schnapp- bzw. Paßverbindung versehen ist.

Die vorbekannte Membranfilterplatte hat den Nachteil, daß sich Einzelteile unterschiedlichen Alters und damit verbundener unterschiedlicher Schrumpfung nicht mehr zuverlässig zusammenfügen lassen.

Der Erfindung liegt damit die Aufgabe zugrunde, die vorbekannte Membranfilterplatte derart weiterzubilden, daß sich auch Einzelteile unterschiedlichen Alters und damit verbundener unterschiedlicher Schrumpfung auf einfachste Weise zusammenfügen lassen, wobei die Rahmenmembranen auf der Trägerplatte zur Membranfilterplattenmitte hin zentriert und formschlüssig in Position gehalten werden.

Erfindungsgemäß wird diese Aufgabe durch die im Kennzeichen des Hauptanspruches aufgeführten Merkmale gelöst. Besonders vorteilhafte Ausführungsformen der Erfindung sind Gegenstand der Unteransprüche.

Durch die Ausbildung von Trägerplatte und Dichtrandrahmen mit rück- bzw. vorspringenden Stufen erfüllt die Trägerplatte nicht nur die Aufgabe der Aufnahme der Rundschnurdichtungen etc., sondern auch diejenige der Zentrierung der Rahmenmembranen und hält letztere in Position. Hierdurch sind keinerlei Schnapp- oder Paßverbindungen erforderlich, vielmehr lassen sich auch Einzelteile unterschiedlichen Alters und damit verbundener unterschiedlicher Schrumpfung auf einfachste Weise zusammenfügen, da die Rahmenmembranen ja nur auf die Trägerplatte aufgelegt werden und die Rahmenmembranen dann auf der Trägerplatte durch die Zentriermöglichkeit zur Membranfilterplattenmitte hin zentriert und somit formschlüssig in Position gehalten werden. Die Ablaufkanäle etc. sind ausschließlich in den Membranen vorgesehen, woraus ein besonders einfacher Aufbau der Trägerplatte resultiert. Alle vier Eckbohrungen werden neben der Funktion von Einlauf und Ablauf vorzugsweise gleichzeitig als Verschraubung für Trägerplatte und Dichtrandrahmen genutzt, wobei die Einlaufverschraubung sowohl für Durchstecktuch- als auch als Filtertuchverschraubung ausführbar ist.

Bei der bevorzugten Ausbildung der erfindungsgemäßen Membranfilterplatte mit Randstufe und Randnut wird eine Entlastung hinsichtlich des durch die Membran und die Verbindung zwischen den Dichtrandrahmen und der Trägerplatte, insbesondere Schraubverbindung, aufzunehmenden, vom Zentralbereich der Membranfilterplatte bzw. der Trägerplatte nach außen einen Schub erzeugenden Filtrationsdruckes erreicht, da die entsprechenden, nach außen wirkenden Kräfte durch die Randdichtung im Zusammenwirken mit Randnut und Randstufe der Trägerplatte bzw. des Dichtrandrahmens bzw. der Dichtrandrahmen unter gleichzeitiger Außenzentrierung aufgenommen werden. Dabei werden nicht nur unter gleichzeitiger abdichtender Zentrierung die nach außen wirkenden Kräfte in der vorstehend angegebenen Weise aufgefangen, sondern es lassen sich auch Toleranzen, die bei unterschiedlicher Alterung der einzelnen Kunststoffteile der Membranfilterplatte auftreten können, leicht aufnehmen, indem nämlich die auszuwechselnde Rahmenmembran auch bei gewissen Abmessungsunterschieden gegenüber der verbleibenden Trägerplatte durch das erzeugte Randspiel ohne weiteres dichtend angepaßt werden können.

Die Erfindung wird im folgenden anhand einer Zeichnung erläutert. Dabei zeigt:

Fig. 1 ein Ausführungsbeispiel einer Membranfilterplatte nach der Erfindung im Schnitt senkrecht zur Trägerplattenmittelebene im Bereich des Dichtrandes;

Fig. 2 die Trägerplatte der Membranfilterplatte von Figur 1 im Schnitt im Bereich des Dichtrandes in Figur 1 entsprechender Darstellung;

Fig. 3 im Schnitt senkrecht zur Trägerplattenmittelebene eine Eckeinlaufbohrung der Membranfilterplatte von Figur 1 und 2;

Fig. 4 im Schnitt senkrecht zur Trägerplattenmittelebene eine Eckauslaufbohrung der Membranfilterplatte von Figur 1 und 2;

Fig. 5 einen Schnitt durch die Membranfilterplatte von Figur 1 bis 4, senkrecht zur Trägerplattenmittelebene, in einem außerhalb der Eckeinlauf- und Eckauslaufbohrungen liegenden Bereich, wobei als zusätzliche, in Figur 1 nicht dargestellte Einzelheit Ablaufkanäle wiedergegeben sind ; und

Fig. 6 ein gegenüber der Membranfilterplatte von Figur 1 bis 5 abgewandeltes Ausführungsbeispiel mit Außenzentrierung.

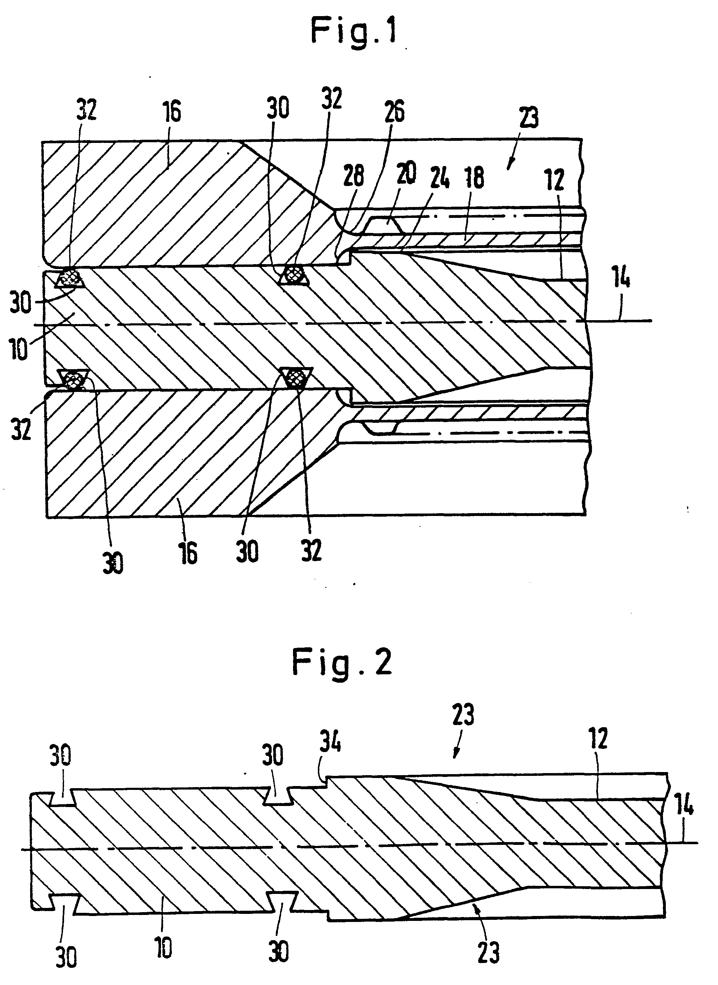

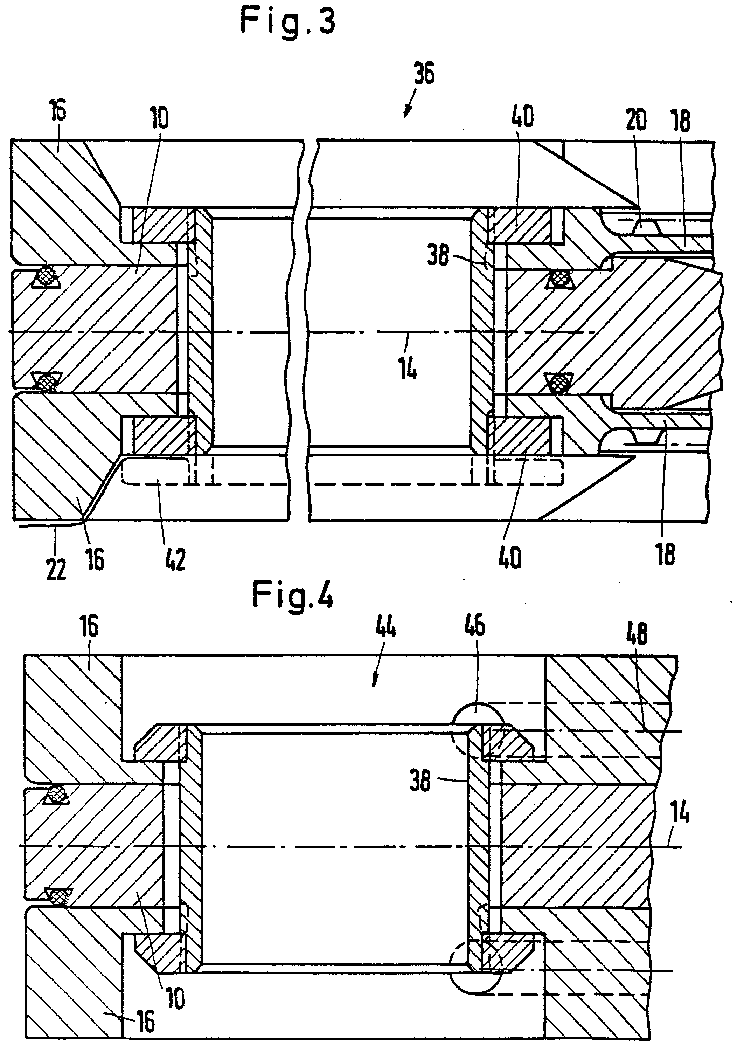

Wie Figur 1 erkennen läßt, weist die dort gezeigte Membranfilterplatte eine Trägerplatte 10 auf, die in ihrem Zentralbereich mit einer im wesentlichen ebenen Trägerplattenfläche 12 versehen ist. Beidseits der Trägerplatte 10, deren Trägerplattenmittelebene mit 14 bezeichnet ist, ist jeweils eine Rahmenmembran aus Vollkunststoff angeordnet, die aus jeweils einem Dichtrandrahmen 16 und einer einstückig damit ausgebildeten eigentlichen Membran 18 besteht, an deren der Trägerplattenfläche 12 abgewandter Seite Distanznocken 20, Distanzrippen oder dergleichen zum Anlegen eines in Figur 1 und 2 nicht gezeigten, in Figur 3, unten links, jedoch schematisch angedeuteten Filtertuches 22 oder dergleichen vorgesehen sind. Die Membran 18 liegt in Figur 1 im Einbauzustand in ihrer unbelasteten Normalstellung, wobei sie also eine im wesentlichen ebene Tafel bildet. Eine der Membran 18 zugewandte Anlagefläche der Trägerplatte 10 verläuft bei dem gezeigten Ausführungsbeispiel wie bei der Membranfilterplatte nach der EP-A-0 081 715 auf die zur weiteren Erläuterung insoweit verwiesen wird, vom Dichtrandrahmen 16 aus in einen Übergangsbereich 23 zwischen dem Dichtrand und der Trägerplattenfläche 12 so, daß zwei Sollbiegelinien 24, 26 für die Membran 18 gebildet werden, deren Bedeutung ebenfalls in der EP-A-0 081 715 erläutert ist.

Wie Figur 1 weiterhin erkennen läßt, ist der Dichtrandrahmen 16 an seiner der Trägerplatte 10 zugewandten Seite im wesentlichen glatt und eben ausgebildet, wobei er nahe dem Übergangsbereich 23 eine rückspringende Stufe 28 aufweist. Die Trägerplatte 10 weist an ihren dem jeweiligen Dichtrandrahmen 16 zugewandten Anlageflächen jeweils zwei rückspringend-trapezförmig ausgebildete Dichtnuten 30 (umlaufend) auf, in die, wie aus Figur 1 ersichtlich, jeweils Rundschnurdichtungen 32 eingelegt sind. Ferner ist die Trägerplatte 10 nahe dem Übergangsbereich 23 mit einer vorspringenden, wie die rückspringende Stufe 28 umlaufend ausgebildeten Stufe 34 versehen, in die die rückspringende Stufe 28 des Dichtrandrahmens 16 eingreift, wodurch die Rahmenmembranen 16, 18 in der aus Figur 1 ersichtlichen Weise bezüglich der Trägerplattenmitte zentriert sind.

Alle vier Eckbohrungen der erfindungsgemäßen Membranfilterplatte sind bei dem gezeigten Ausführungsbeispiel zu Eckeinlauf- bzw. Eckauslaufbohrungen und gleichzeitig zur Verschraubung von Trägerplatte 10 und Dichtrandrahmen 16 ausgebildet. Figur 3 zeigt einen Schnitt senkrecht zur Trägerplattenmittelebene 14 durch eine Eckeinlaufbohrung 36, die, mit unterschiedlich ausgebildetem Durchmesser, sowohl die Trägerplatte 10 als auch die Dichtrandrahmen 16 durchsetzt. Eine Gewindehülse 38 ragt beidseits entsprechend ausgebildeter Anlageflächen der auf die Trägerplatte 10 aufzuschraubenden Dichtrandrahmen 16 mit entsprechenden Gewindeabschnitten vor, auf die Gewindescheiben 40 pressend aufgeschraubt sind, durch welche die Trägerplatte 10 und die Dichtrandrahmen 16 unter Vermittlung der Rundschnurdichtungen 32 fließmitteldicht zusammengehalten werden. Die Eckeinlaufbohrungen können sowohl für Durchsteck-Filtertücher als auch als Tuchverschraubung ausgeführt sein. Im letztgenannten Fall weist die Eckeinlaufbohrung 36, wie in Figur 3 unten gestrichelt dargestellt, eine entsprechend verlängerte Gewindehülse 38 auf, auf die im Anschluß an die zum Zusammenpressen der Trägerplatte 10 und der Dichtrandrahmen 16 dienende Gewindescheibe 40 mittels einer entsprechenden mit Gewinde versehenen Klemmscheibe 42 das Filtertuch 22 aufgebracht ist.

Figur 4 zeigt eine Eckauslaufbohrung 44, deren lichter Innenbereich über einen Kanal 46, der parallel zur Trägerplattenmittelebene 14 verläuft, und eine Reihe von Querbohrungen 48 it der zum Auflegen des Filtertuches 22 oder dergleichen dienenden Fläche der Membran 18 kommuniziert, wobei also die Ablaufkanäle ausschließlich innerhalb der Rahmenmembran 16, 18 verlaufen.

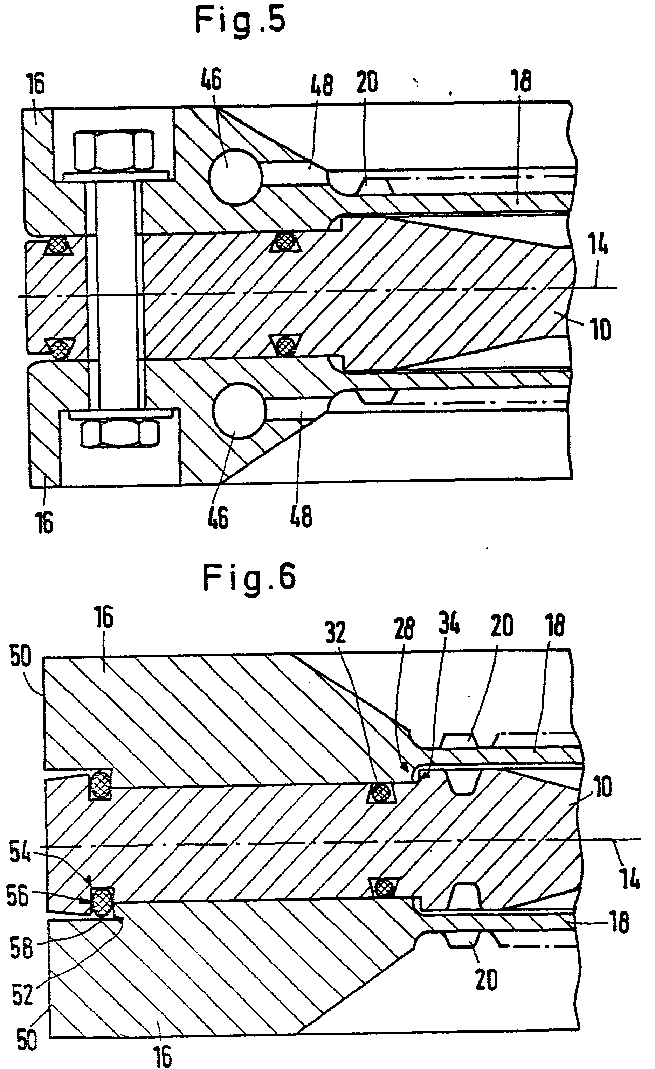

Bei dem in Figur 5 gezeigten Ausführungsbeispiel ist zu erkennen, wie die umlaufenden Kanäle 46 über die Querbohrungen 48, ganz in Übereinstimmung mit Figur 4 der EP-A-0 081 715, mit der jeweiligen Filterkammer kommunizieren ; Figur 4 läßt ja bereits erkennen, auf welche Weise die Ablaufkanäle 46 mit dem lichten Innendurchmesser der Eckaußenbohrungen 44 in Verbindung stehen.

Bei dem in Figur 6 gezeigten Ausführungsbeispiel weist der Dichtrandrahmen 16 seiner Umfangsfläche 50 an seiner der Trägerplatte 10 zugewandten Innenfläche eine rückspringende Randstufe 52 auf, so daß also der Dichtrandrahmen in dem vom Zentralbereich der Trägerplatte 10 gesehen außen an die Randstufe 52 anschließenden Bereich eine geringere Dicke hat als in dem an die Randstufe 52 in Richtung auf den Zentralbereich der Trägerplatte 10 hin liegenden Bereich. Die Trägerplatte 10 weist an ihren den Dichtrandrahmen 16 zugewandten Anlageflächen Randnuten 54 auf, deren zum Zentralbereich der Trägerplatte 10 hin liegende Innenwandung im wesentlichen mit der Randstufe 52 fluchtet, während eine jeweilige Außenwandung 56 so weit in Richtung auf die Innenfläche des Dichtrandrahmens 16 vorsteht, daß sie die jeweilige Randstufe 52 in der aus Figur 6 ersichtlichen Weise hintergreift. Von der Kante der Außenwandung 56 aus verläuft die Anlagefläche der Trägerplatte 10 dann bis zu deren mit der Umfangsfläche 50 des Dichtrandrahmens 16 fluchtenden Umfangsfläche hin schräg in Richtung auf die Trägerplattenmittelebene 14.

In die Randnut 54 ist eine Randdichtung 58, beispielsweise eine Rundschnurdichtung aus Gummi oder dergleichen, eingelegt, die unter der Wirkung des die Rahmenmembran 16, 18 mit der Trägerplatte 10 zusammenhaltenden Anpreß- bzw. Schraubdruckes einerseits und des nach außen wirkenden Filtrationsdruckes andererseits zumindest an den Boden der Randnut 54 der Trägerplatte 10 und den Außenbereich, also den außerhalb der Randstufe 52 zur Umfangsfläche 50 hin liegenden Bereich der Innenfläche des Dichtrahmens 16 dichtend anpreßbar ist. Hierdurch wird nicht nur ein Auffangen der nach außen wirkenden Kräfte, hervorgerufen durch den Filtrationsdruck, unter gleichzeitiger Randabdichtung gewährleistet, vielmehr lassen sich auch Toleranzunterschiede etc. zwischen auszuwechselnden Rahmenmembranen und Trägerplatte leicht ausgleichen.

Selbstverständlich eignen sich die vorstehend beschriebenen und beanspruchten Merkmale der Membranfilterplatte nach der Erfindung vorzugsweise auch in Verbindung mit den übrigen Merkmalen der in der EP-A-0 081 715 beschriebenen Membranfilterplatte, in entsprechender Modifizierung, auf die zur Ergänzung des Erfindungsgedankens insoweit in vollem Umfang Bezug genommen wird.

**Patentansprüche**

1. Membranfilterplatte für eine Filterpresse oder dergleichen, mit einer Trägerplatte (10), wenigstens einer an einer Seite der Trägerplatte (10) angeordneten Membran (18), die vorzugsweise mit Distanznocken (20) oder dergleichen versehen ist, zum Auflegen eines Filtertuches (22) oder dergleichen, und einem die Trägerplatte (10) und die Membran (18) umgebenden, diese im wesentlichen fließmitteldicht miteinander verbindenden Dichtrand, dessen der Trägerplattenmittelebene (14) parallele Innenfläche(n) auf der die Membran (18) aufweisenden Seite bzw. beidseits der Trägerplatte (10) mit Abstand von der Membranebene in deren unbelasteter Normalstellung angeordnet ist bzw. sind, wobei die der Membran (18) zugewandte Anlagefläche der Trägerplatte (10) in einem zwischen der Verbindungslinie der Membran (18) mit dem Dichtrand und dem Zentralbereich der Trägerplatte (10), in dem diese sich parallel zur Trägerplattenmittelebene (14) erstreckt, gelegenen Übergangsbereich auf die Trägerplattenmittelebene (14) hin schräg verläuft, in dem die der Membran (18) zugewandte Anlagefläche der Trägerplatte (10) von der Verbindungslinie der Membran (18) mit dem Dichtrand aus zur Erzeugung je einer Sollbiegelinie für die Filtrationsbzw. die Abpreßphase zunächst im wesentlichen parallel zur Trägerplattenmittelebene (14), dann schräg, vorzugsweise in einem Winkel von 3 bis 15°, insbesondere 10° bis 15°, auf diese hin verlaufend und alsdann über im wesentlichen den gesamten Zentralbereich der Trägerplatte (10) parallel zur Trägerplattenmittelebene (14) sich erstreckend ausgebildet ist oder in dem Übergangsbereich unter Vermeidung definierter Biegelinien als mit kontinuierlich sich ändernder Biegung von der Verbindungslinie in die Trägerplattenfläche (12) im Zentralbereich der Trägerplatte (10) übergehende Schmiegefläche ausgebildet ist, wobei der Dichtrandrahmen (16) und die Membran (18) als einstückige, aus Kunststoffmaterial hergestellte Rahmenmembran (16, 18) ausgebildet sind, dadurch gekennzeichnet, daß der Dichtrandrahmen (16) der Rahmenmembran (16, 18) an seiner der Trägerplatte (10) zugewandten, zur Trägerplattenmittelebene (14) parallelen Innenfläche im wesentlichen eben ausgebildet ist ; daß die Trägerplatte (10) an der dem Dichtrandrahmen (16) zugewandten Anlagefläche jeweils mindestens eine Dichtnut (30) mit eingelegter Rundschnurdichtung (32) oder dergleichen aufweist ; daß die Trägerplatte (10) an ihrer dem Dichtrandrahmen (16) zugewandten Seite im Bereich des Dichtrandrahmens (16) unter Ausbildung einer vorspringenden Stufe (34) mit geringerer Dicke ausgebildet ist als in ihrem an die vorspringende Stufe (34) in Richtung auf den Zentralbereich anschließenden Bereich ; und daß der Dichtrandrahmen (16) nahe dem Übergangsbereich eine rückspringende Stufe (28) aufweist, die mit der vorspringenden Stufe (34) zum Zentrieren der Rahmenmembran (16, 18) bezüglich der Trägerplatte (10) zusammenwirkt.

2. Membranfilterplatte nach Anspruch 1, dadurch gekennzeichnet, daß die Dichtnut (30) rückspringendtrapezförmig ausgebildet ist.

3. Membranfilterplatte nach einem der vorangehenden Ansprüche, dadurch gekennzeichnet, daß der Dichtrandrahmen (16) und die Trägerplatte (10) mit Eckeinlauf- (36) und Eckauslaufbohrungen (44) versehen sind, die jeweils von einer an beiden Enden ein Schraubgewinde aufweisenden Gewindehülse (38), vorzugsweise aus Kunststoffmaterial bestehend, durchsetzt sind, wobei auf die Hülsenenden aufgeschraubte Gewindescheiben (38) Dichtrandrahmen (16) und Trägerplatte (10) dichtend zusammenpressen.

4. Membranfilterplatte nach Anspruch 3, dadurch gekennzeichnet, daß der Dichtrandrahmen (16) jeweils einen parallel zur Trägerplattenmittelebene (14) sich erstreckenden Kanal (46) aufweist, der im Bereich der Eckauslaufbohrungen (44) mit diesen kommuniziert und über eine Reihe von Querbohrungen (48) mit der zum Auflegen des Filtertuches (22) oder dergleichen dienenden Fläche der Membran (18) in Fließmittelverbindung steht.

5. Membranfilterplatte nach Anspruch 3 oder 4, dadurch gekennzeichnet, daß die Eckeinlaufverschraubungen (36) jeweils eine Tuchverschraubung (42) aufweisen.

6. Membranfilterplatte nach Anspruch 5, dadurch gekennzeichnet, daß die Tuchverschraubungen jeweils eine zusätzlich zu den Gewindescheiben (40) auf die Gewindehülse (38) aufschraubbare Klemmscheibe (42) aufweisen.

7. Membranfilterplatte nach einem der vorangehenden Ansprüche, dadurch gekennzeichnet, daß der Dichtrandrahmen (16) in einem seiner Umfangsfläche (50) benachbarten Außenbereich seiner der Trägerplatte (10) zugewandten Innenfläche unter Ausbildung einer rückspringenden Randstufe (52) mit geringerer Dicke ausgebildet ist als in seinem an die Randstufe (52) in Richtung auf den Zentralbereich der Trägerplatte (10) anschließenden Bereich; daß die Trägerplatte (10) an ihrer dem Dichtrandrahmen (16) zugewandten Anlagefläche eine Randnut (54) aufweist, deren zum Zentralbereich der Trägerplatte (10) hin liegende Innenwandung mit der Randstufe (52) des Dichtrandrahmens (16) im wesentlichen fluchtet und deren im wesentlichen parallel zur Umfangsfläche (50) des Dichtrandrahmens (16) verlaufende Außenwandung (56) die Randstufe (52) des Dichtrandrahmens (16) hintergreift; und daß in die Randnut (54) eine dichtend an deren Außenwandung (56) sowie an den an die Randstufe (52) anschließenden Außenbereich der Innenfläche des Dichtrandrahmens (16) dichtend anpreßbare Randdichtung (58) eingelegt ist.

8. Membranfilterplatte nach Anspruch 7, dadurch gekennzeichnet, daß die Randdichtung (58) als Rundschnurdichtung ausgebildet ist.

9. Membranfilterplatte nach Anspruch 7 oder 8, dadurch gekennzeichnet, daß die Randdichtung (58) an die Bodenfläche der Randnut (54) anpreßbar ist.

10. Membranfilterplatte nach einem der Ansprüche 7 bis 9, dadurch gekennzeichnet, daß die Anlagefläche der Trägerplatte (10) von der Kante der Außenwandung (56) der Randnut (54) zur Umfangsfläche hin schräg in Richtung auf die Trägerplattenmittelebene (24) verläuft.

11. Membranfilterplatte nach einem der Ansprüche 7 bis 10, dadurch gekennzeichnet, daß die Randnut (54) rückspringend-trapezförmig ausgebildet ist.

**Claims**

1. A diaphragm filter plate for a filter press or the like, comprising a support plate (10), at least one diaphragm (18) disposed on one side of the support plate (10) and preferably equipped with spacer cams (20) or the like for resting a filter cloth (22) or the like thereon, and a sealing edge surrounding the support plate (10) and the diaphragm (18) and connecting them in substantially solvent-tight manner, the inner surface (s) of the sealing strip parallel to the central plane (14) of the support plate being disposed on the side of the support plate (10) comprising the diaphragm (18) or on both sides thereof at a distance from the plane of the diaphragm in its normal unloaded position, and in a transition region disposed between the line connecting the diaphragm (18) to the sealing edge and the central region of the support plate (10), in which the plate extends parallel to the support-plate central plane (14), the bearing surface of the support plate (10) facing the diaphragm (18) extends obliquely towards the support-plate central plane (14), and in order to obtain a set bending line for the phase of filtration or separation by pressing, the bearing surface of the support plate (10) facing the diaphram (18) extends from the line joining the diaphragm (18) to the sealing edge, initially substantially parallel to the support-plate central plane (11), then obliquely, preferably at an angle of 3 to 15°, more particularly 10° to 15°, towards it and then parallel to the support-plate central plane (14) over substantially the entire central region of the support plate (10), or is formed in the transition region, avoiding defined bending lines, as an osculant surface merging with continuously changing curvature from the connecting line into the support-plane surface (12) in the central region of the support plate (10), the sealing-edge frame (16) and the diaphragm (18) being constructed as a one-piece frame diaphragm (16, 18) made of plastics material, characterised in that the sealing-edge frame (16) of the frame diaphragm (16, 18) is made substantially flat on its inner surface facing the support plate (10) and parallel to the support-plate central plane (14); the bearing surface of the support plate (10) facing the sealing-edge frame (16) respectively comprises at least one sealing groove (30) with an inserted toroidal sealing ring (32) or the like; the side of the support plate (10) facing the sealing edge frame (16) is made the inner in the region of the sealing strip frame (16), forming a projecting step (31), than in the region adjacent the projecting step (34) in the direction towards frame (16) has a re-entrant step (28) which co-operates with the projecting step (31) for centring the frame diaphragm (16, 18) with respect to the support plate (10).

2. A diaphragm filter plate according to claim 1, characterised in that the sealing groove (30) is given a re-entrant trapezoidal shape.

3. A diaphragm filter plate according to any of the preceding claims, characterised in that the sealing edge frame (16) and the support plate (10) are provided with corner inlet bores (36) and corner outlet bores (44) each traversed by a threaded sleeve (38) screw-threaded at both ends and preferably made of plastics, and threaded discs (38) screwed on to the ends of the sleeve press the sealing edge frame (16) against the support plate (10) in sealing-tight relationship.

4. A diaphragm filter plate according to claim 3, characterised in that the sealing strip frame (16) has a respective duct (44) extending parallel to the support-plate central plane (14) and communicating with the corner outlet bores (44) in the region thereof and being in solvent connection via a row of transverse bores (48) with the surface of the diaphragm (18) used for resting the filter cloth (22) or the like thereon.

5. A diaphragm filter plate according to claim 3 or 4, characterised in that the corner inlet screw couplings (36) each comprise a cloth screw coupling (42).

6. A diaphragm filter plate according to claim 5, characterised in that the cloth screw couplings each comprise a clamping plate (42) screwable on to the threaded sleeve (38) in addition to the threaded plates (40).

7. A diaphragm filter plate according to any of the preceding claims, characterised in that an outer region of the inner surface of the sealing edge frame (16) facing the support plate (10) and adjacent the peripheral surface (50) is made thinner, forming a re-entrant edge step (52), than the region adjacent the edge step (52) in the direction towards the central region of the support plate (10) ; the bearing surface of the support plate (10) facing the sealing edge frame (60) is formed with an edge groove (54) whose inner wall towards the central region of the support plate (10) is substantially flush with the edge step (52) of the sealing edge frame (16), and whose outer wall (56) extending substantially parallel to the peripheral surface (50) of the sealing edge frame (16) extends behind the edge step (52) of the sealing edge frame (16) ; and an edge seal (58) is inserted into the edge groove (54) and can be pressed in sealing-tight relationship against its outer wall (52) and against the outer region of the inner surface of the sealing edge frame (16) adjacent the edge step (52).

8. A diaphragm filter plate according to claim 7, characterised in that the edge seal (58) is constructed as a toroidal ring.

9. A diaphragm filter plate according to claim 7 or 8, characterised in that the edge seal (58) is adapted for pressing against the bottom surface of the edge groove (54).

10. A diaphragm filter plate according to any of claims 7 to 9, characterised in that the bearing surface of the support plate (10) extends obliquely from the edge of the outer wall (56) of the edge groove (54) towards the peripheral surface in the direction towards the support-plate central plane (24).

11. A diaphragm filter plate according to any of claims 7 to 10, characterised in that the edge groove (54) is given a re-entrant trapezoidal shape.

**Revendications**

1. Plaque de filtre à membrane pour un filtre-presse ou analogue, comportant une plaque-support (10), au moins une membrane (18) disposée sur une face de la plaque-support (10) et qui est pourvue de préférence d'ergots espaceurs (20) ou analogues, pour la pose d'une toile de filtre (22) ou analogue, et comprenant également un bord d'étanchéité qui entoure la plaque-support (10) et la membrane (18), relie celles-ci l'une à l'autre de façon sensiblement étanche au fluide, et dont une ou les surfaces intérieures parallèles au plan central de la plaque-support (14) sont disposée(s) dans leur position normale non chargée sur la face présentant la membrane (18) ou respectivement des deux côtés de la plaque-support (10) avec un écart par rapport au plan de la membrane, la surface d'installation de la plaque-support (10) tournée vers la membrane (18) s'étendant de façon inclinée vers l'intérieur sur le plan central de la plaque-support (14) dans une zone de superposition disposée entre la ligne de liaison de la membrane (18) avec le bord d'étanchéité et la zone centrale de la plaque-support (10), dans laquelle celle-ci s'étend parallèlement au plan central de la plaque-support (14), zone de superposition dans laquelle la surface d'installation de la plaque-support (10) tournée vers la membrane (18) est formée à partir de la ligne de liaison de la membrane (18) avec le bord d'étanchéité de façon à s'étendre tout d'abord sensiblement parallèlement au plan central de la plaque-support (14) puis de façon inclinée, de préférence selon un angle de 3 à 15° en particulier 10 à 15°, de façon dirigée vers l'intérieur vers celui-ci et ensuite sur sensiblement toute la zone centrale de la plaque-support (10) parallèlement au plan central de la plaque-support (14), pour réaliser respectivement une ligne de courbure de consigne pour la phase de filtration et respectivement la phase d'extraction par pression, ou dans laquelle la surface de la plaque-support (10) tournée vers la membrane (18) est formée dans la zone de superposition, en évitant une ligne de courbure définie, par une surface en fausse équerre se prolongeant dans la zone centrale de la plaque-support (10) avec une courbure continuellement variable à partir de la ligne de liaison dans la surface de plaque-support (12), le cadre du bord d'étanchéité (16) et la membrane (18) étant formés d'une membrane-cadre (16, 18) d'une seule pièce fabriquée en matière plastique, plaque de filtre à membrane caractérisée en ce que le cadre de bord d'étanchéité (16) de la membrane-cadre (16, 18) est formé de façon sensiblement plane sur sa surface intérieure tournée vers la plaque-support (10) et parallèle au plan central de la plaque-support (14) ; en ce que la plaque-support (10) présente sur la surface d'installation tournée vers le cadre de bord d'étanchéité (16) respectivement au moins une rainure d'étanchéité (30) avec un joint torique (32) ou analogue inséré ; en ce que sur sa face tournée vers le cadre de bord d'étanchéité (16) dans la zone du cadre de bord d'étanchéité (16) en formant un épaulement saillant (34) la plaque-support (10) est formée avec une épaisseur plus petite que dans sa zone se raccordant sur l'épaulement saillant (34) en direction de la zone centrale ; et en ce que le cadre de bord d'étanchéité (16) présente à proximité de la zone de superposition un épaulement en retrait (28) qui coopère avec l'épaulement saillant (34) pour centrer la membrane-cadre (16, 18) par rapport à la plaque-support (10).

2. Plaque de filtre à membrane selon la revendication 1, caractérisée en ce que la rainure d'étanchéité (30) est en forme de queue d'aronde.

3. Plaque de filtre à membrane selon l'une des revendications précédentes, caractérisée en ce que le cadre de bord d'étanchéité (16) et la plaque-support (10) sont pourvus d'orifices d'entrée d'angle (36) et de sortie d'angle (44) qui sont traversés chacun par une douille filetée (38) présentant à ses deux extrémités un filetage de vissage et de préférence constituée de matière plastique, des rondelles plates filetées (40) vissées sur les extrémités de la douille comprimant de façon étanche le cadre de bord d'étanchéité (16) et la plaque-support (10).

4. Plaque de filtre à membrane selon la revendication 3, caractérisé en ce que le cadre de bord d'étanchéité (16) présente respectivement un canal (46) s'étendant parallèlement au plan central de la plaque-support (14) et qui communique dans la zone des orifices de sortie d'angle (44) avec ceux-ci et qui est en liaison fluidique par l'intermédiaire d'une série d'alésages transversaux (48) avec la surface de la membrane (18) servant à la pose de la toile de filtration (22) ou analogue.

5. Plaque de filtre à membrane selon la revendication 3 ou 4, caractérisé en ce que les raccords à vis d'entrée d'angle (36) présentent chacun un raccord à vis de la toile (42).

6. Plaque de filtre à membrane selon la revendication 5, caractérisée en ce que les raccords à vis de la toile présentent chacun une rondelle plate de blocage (42) qui peut être vissée sur la douille filetée (38) en plus de la rondelle plate de vissage (40).

7. Plaque de filtre à membrane selon l'une des revendications précédentes, caractérisée en ce que dans une zone externe de sa surface intérieure tournée vers la plaque-support (10) et voisine de sa surface périphérique (50), en formant un épaulement de bordure (52) en retrait le cadre de bord d'étanchéité (16) est formé avec une épaisseur plus petite que dans sa zone se raccordant sur l'épaulement de bordure (52) en direction de la zone centrale de la plaque-support (10) ; en ce que la plaque-support (10) présente sur sa surface d'installation tournée vers le cadre de bord d'étanchéité (16) une rainure de bordure (54), dont la paroi intérieure se trouvant vers la zone centrale de la plaque-support (10) est alignée sensiblement avec l'épaulement de bordure (52) du cadre de bord d'étanchéité (16) et dont la paroi extérieure (56) dirigée sensiblement parallèlement à la surface périphérique (50) du cadre de bord d'étanchéité (16) vient en prise sur l'arrière avec l'épaulement de bordure (52) du cadre de bord d'étanchéité (16) ; et en ce que dans la rainure de bordure (54) est inséré un joint d'étanchéité de bordure (58) pouvant être comprimé de façon étanche sur sa paroi externe (56) ainsi que sur la zone externe de la surface intérieure du cadre de bord d'étanchéité (16) et qui se raccorde sur l'épaulement de bordure (52).

8. Plaque de filtre à membrane selon la revendication 7, caractérisée en ce que le joint d'étanchéité de bordure (58) est formé d'un joint torique d'étanchéité.

9. Plaque de filtre à membrane selon la revendication 7 ou 8, caractérisée en ce que le joint d'étanchéité de bordure (58) peut être comprimé sur la surface de fond de la rainure de bordure (54).

10. Plaque de filtre à membrane selon l'une des revendications 7 à 9, caractérisée en ce que la surface d'installation de la plaque-support (10) s'étend à partir du bord de la paroi externe (56) de la rainure de bordure (54) vers la surface périphérique de façon inclinée en direction du plan central de la plaque-support (24).

11. Plaque de filtre à membrane selon l'une des revendications 7 à 10, caractérisée en ce que la rainure de bordure (54) est en forme de queue d'aronde.

# Fig.1

# Fig.2

1

EP 0 208 076 B1

Fig.3

Fig.4

2

# Fig.5

# Fig.6